# FASCICULE DE BREVET EUROPEEN

(11) **EP 3 072 142 B1**
(45) Date de publication et mention de la délivrance du brevet: **07.03.2018**
(21) Numéro de dépôt: 14796212.0
(22) Date de dépôt: 30.09.2014
(51) Int. Cl.: H01H 9/00, H01H 73/18, H01H 71/02, B23K 26/36, B23K 26/40, B29C 37/00, B08B 17/06

(54) **PROCÉDÉ DE TRAITEMENT DE LA SURFACE D'UNE PAROI DANS UN APPAREIL DE PROTECTION ÉLECTRIQUE ET APPAREIL COMPORTANT AU MOINS UNE PAROI TRAITÉE SELON CE PROCÉDÉ**
VERFAHREN ZUR OBERFLÄCHENBEHANDLUNG EINER WAND IN EINER ELEKTRISCHEN SCHUTZVORRICHTUNG SOWIE NACH DIESEM VERFAHREN BEHANDELTE VORRICHTUNG MIT MINDESTENS EINER WAND
METHOD FOR TREATING THE SURFACE OF A WALL IN AN ELECTRICAL PROTECTION APPARATUS AND APPARATUS COMPRISING AT LEAST ONE WALL TREATED ACCORDING TO SAID METHOD

(30) Priorité: 19.11.2013 FR 1361352
(43) Date de publication de la demande: 28.09.2016
(73) Titulaire: Schneider Electric Industries SAS, 92500 Rueil-Malmaison (FR)
(72) Inventeur: RAPEAUX, Michel, 38050 Grenoble Cedex 09 (FR); RIVAL, Marc, 38050 Grenoble Cedex 09 (FR); FAIK, Salaheddine, 38050 Grenoble Cedex 09 (FR)
(74) Mandataire: Colette, Marie-Françoise
(86) Numéro de dépôt international: PCT/FR2014/052455
(87) Numéro de publication internationale: WO 2015/075332

(56) Documents cités:
- WO-A1-2013/030343
- FR-A1- 2 682 531
- FR-A1- 2 803 686

## Description

La présente invention concerne un procédé de traitement de la surface d'une paroi, en vue de réduire sa conductivité, ladite surface étant située dans une zone, dite zone froide, ladite zone étant située à proximité d'une zone dans laquelle est susceptible de se produire un arc électrique dans un appareil de protection électrique, ladite zone froide constituant une zone de recondensation des résidus de la coupure.
Lors de la recherche à la fois d'une miniaturisation, d'une augmentation des performances et de réalisation d'architectures modulaires à bas coût des disjoncteurs actuels, se pose le problème l'une mauvaise isolation post-coupure entre l'entrée et la sortie des disjoncteurs basse tension après un essai de court-circuit de service.
La cause de ce problème est principalement due à deux phénomènes :
Premièrement, il se produit pendant le phénomène de coupure de courant de court circuit, une ablation des matériaux situés dans la chambre de coupure au voisinage des contacts. Les éléments contribuant à ce phénomène sont les éléments conducteurs non oxydés lors de la coupure (principalement l'argent) et les éléments carbonés résultant de la combustion des parois isolantes. Les éléments Fe, Cu, W, Ni présents contribuent peu à la dégradation de l'isolation diélectrique.
Deuxièmement, il se produit une condensation des éléments vaporisés décrits ci-dessus dans les zones éloignées de la zone dite de coupure. Ces zones de condensation sont principalement situées dans les interstices entre les différents boîtiers constituant le disjoncteur.
Les matériaux constituant ces zones « froides » sont soumis à de nombreuses contraintes thermiques et mécaniques ne permettant pas de choisir les matériaux les plus performants d'un point de vue diélectrique.

Pour remédier à ce problème, et obtenir un courant de fuite minimal, des artifices sont utilisés afin de diminuer les effets néfastes de cette recondensation. On réalise ainsi des dépôts de peintures, de vernis, ou d'huile à base de silicone ou de PTFE.
Les inconvénients majeurs de tels produits sont une non maîtrise de la composition exacte de ces composants, une volatilité de certains composants lors de la mise en oeuvre du dépôt, des problèmes d'adhésion sur une surface mal préparée et l'exigence d'une compatibilité avec les exigences Rohs et Reach.

La présente invention résout ces problèmes et propose un procédé permettant de réduire la conductivité des surfaces des parois situées dans des zones froides d'un appareil de protection électrique, de manière à répondre aux exigences diélectriques post coupure en permettant de prendre en compte principalement les contraintes thermiques et mécaniques du matériau de ces parois au vu des exigences de réussite en coupure de l'arc.

A cet effet, la présente invention a pour objet un procédé de traitement du genre précédemment mentionné, ce procédé étant caractérisé en ce qu'il consiste à réaliser sur cette surface une micro-texturation de manière à favoriser une inhomogénéité de la recondensation des résidus de coupure par une croissance des dépôts de ces résidus sur la surface de manière à créer des îlots de résidus et ainsi limiter la conductivité du dépôt résultant.

De préférence, l'on réalise une croissance des dépôts suivant une direction sensiblement perpendiculaire au plan de ladite surface.

Selon une caractéristique particulière, l'on réalise grâce à ce procédé de micro texturation une surface de type super hydrophobe, ce procédé étant optimisé de manière à réduire très sensiblement les tensions superficielles sur la surface, ce qui permet de réduire le nombre de sites de nucléation et favorise une croissance des dépôts suivant l'axe vertical.

Selon une autre caractéristique, ce procédé est un procédé de micro texturation au laser.

Selon une autre caractéristique, ce procédé est un procédé de micro texturation par laser dont la durée de pulse est inférieure à 1 nano secondes et délivrant une puissance crête supérieure à 10 GW.

Selon une autre caractéristique, la micro-texturation de surface précitée est réalisée directement sur la paroi précitée ou bien est obtenue par moulage de la pièce comportant la paroi précitée par l'intermédiaire d'un moule dont la micro texturation de surface est l'opposé de la micro texturation souhaitée sur la pièce.

Selon une autre caractéristique, cette paroi est réalisée dans un matériau plastique.

La présente invention a encore pour objet un appareil de protection électrique comportant au moins une paroi située dans une zone de recondensation éloignée de la zone d'arc et dont la surface a été modifiée par un procédé de traitement comportant les caractéristiques précédemment mentionnées prises seules ou en combinaison, de manière à améliorer l'isolation post-coupure de l'appareil.

Selon une autre caractéristique particulière, l'appareil précité est un disjoncteur électrique basse tension.

Selon une autre caractéristique, cet appareil est un appareil multipolaire comportant plusieurs blocs unipolaires de coupure, et la paroi précitée appartient à une entretoise située entre deux blocs unipolaires juxtaposés ou bien appartient à un écran diélectrique disposé entre d'une part, les séparateurs et d'autre part, l'organe de contact mobile en position ouverte des contacts.

Mais d'autres avantages et caractéristiques de l'invention apparaîtront mieux dans la description détaillée qui suit et se réfère aux dessins annexés donnés uniquement à titre d'exemple et dans lesquels :
- La figure 1 est une vue partielle en perspective et éclatée d'un disjoncteur selon l'invention comportant plusieurs parois dont la surface est destinée à être microtexturée au moyen du procédé selon l'invention,
- La figure 1a est une vue partielle, en perspective et éclatée montrant plus précisément plusieurs de ces parois,
- La figure 2 est une vue en coupe du disjoncteur selon la figure 1, selon un plan sensiblement perpendiculaire au plan de fixation de l'appareil,
- La figure 3 est une vue schématique, illustrant la réalisation de la cartographie topographique de la surface micro texturée selon l'invention au moyen d'un microscope à force atomique,
- La figure 4 illustre la réalisation de la cartographie résistive de la surface micro texturée et polluée par la recondensation des polluants de coupure afin d'optimiser la micro texturation de la surface, et
- La figure 5 illustre une coupe transversale de la surface microtexturée après la coupure, avec un dépôt discontinu de billes de matériau conducteur sur la surface,

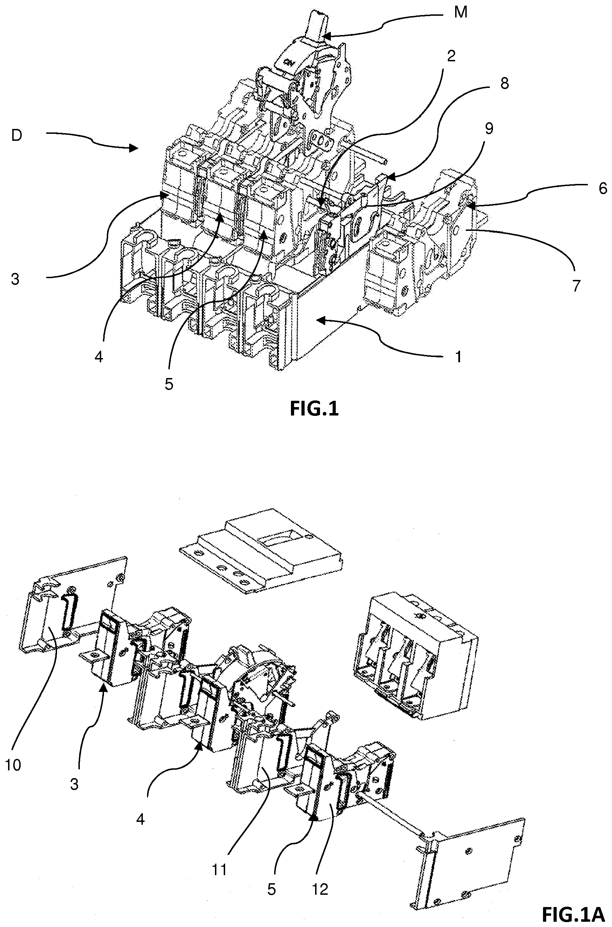

Sur la figure 1, on voit un disjoncteur D basse tension multipolaire connu en soi tel que décrit dans le brevet FR 2 682 531 et constitué par l'assemblage de blocs unipolaires 3,4,5,6, chacun constitué par un boîtier 1 en matière isolante moulée et à l'intérieur duquel sont logés des contacts en forme de pont de contacts mobiles, coopérant avec deux contacts fixes et deux chambres de coupure. Le pont de contacts est porté par un tronçon de barreau, et les différents tronçons de barreau sont solidarisés mécaniquement par des barres de liaison 2 excentrées, commandées par un mécanisme M commun à l'ensemble des blocs unipolaires 3. Cette figure montre deux exemples de parois situées dans des zones dites froides c'est-à-dire éloignées de l'arc électrique lorsque celui-ci se produit, et dont la surface représente une surface de recondensation des gaz de coupure. Ces surfaces comprennent une face latérale 7 d'un bloc unipolaire 6 et une surface extérieure 8 appartenant à une entretoise 9 interposée entre deux blocs unipolaires juxtaposés 5,6.

Sur la figure 1a, on voit un ensemble de trois blocs unipolaires de coupure 3,4,5 agencé selon une orientation opposée à l'orientation du disjoncteur de la figure 1. Cette figure montre d'autres parois latérales de blocs unipolaires et de plaques entretoise comportant des surfaces extérieures 10,11,12 constituant des surfaces de recondensation des gaz de coupure.

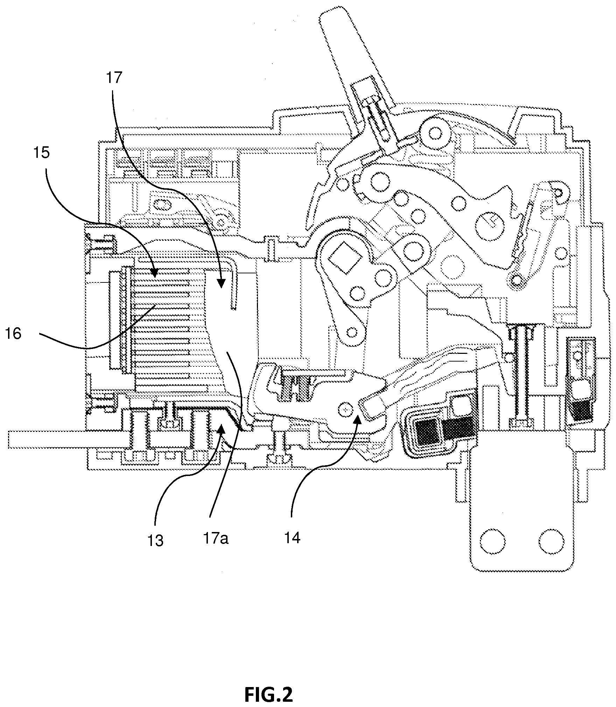

Sur la figure 2, on voit un pôle appartenant à un disjoncteur électrique, muni d'une chambre d'extinction d'arc tel que décrit dans le brevet FR 2 803 686.

Ce pôle comprend un organe de contact fixe 13, un organe de contact mobile 14, et une chambre d'extinction d'arc 15, comportant deux flasques latéraux, des séparateurs 16, une ouverture antérieure située à proximité de la zone de contact de l'organe de contact fixe et une paire d'écrans diélectriques latéraux 17 limitant latéralement l'ouverture antérieure de la chambre. Chaque écran diélectrique latéral est disposé de manière à s'interposer latéralement entre les séparateurs 16 et l'organe de contact mobile en position ouverte. La surface extérieure 17a de ces écrans constitue un autre exemple d'application du procédé selon l'invention, ce procédé allant être décrit dans ce qui suit.

Le procédé selon l'invention consiste à modifier la surface concernée par la recondensation des gaz de coupure en vue d'obtenir une conductivité surfacique minimale après le dépôt de la pollution due à la coupure d'un arc électrique dans un disjoncteur basse tension. Selon une réalisation particulière de l'invention, l'on rend cette surface super hydrophobe par un procédé de micro-texturation de surface favorisant ainsi une inhomogénéité de la recondensation des résidus de coupure par une croissance des dépôts de ces résidus sur la surface de manière à créer des îlots de résidus et ainsi limiter la conductivité du dépôt résultant.

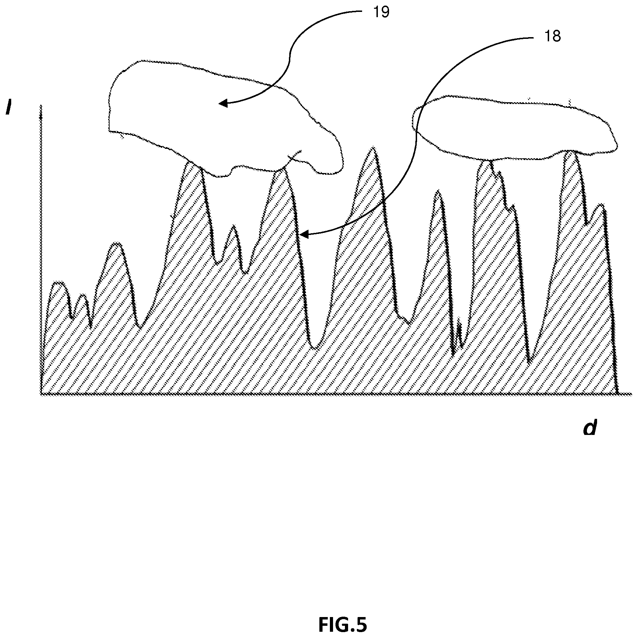

On se reportera avantageusement à la figure 5 qui illustre la surface microtexturée 18 et les îlots 19 de résidus, ces îlots étant constitués de billes de matériau tel l'argent au moyen d'une coupe représentant la longueur d'onde l de la texture en fonction de la distance d sur l'échantillon.

Avantageusement, on réalise cette surface super hydrophobe par un procédé de micro texturation.

La géométrie retenue pour la micro texturation sera optimisée en mesurant la résistance superficielle de la couche en surface, la surface optimum étant la surface la plus inhomogène d'un point de vue diélectrique après dépôt de la pollution. C'est-à-dire que l'on cherche à obtenir une surface sur laquelle les éléments de décomposition de la coupure, lesquels sont conducteurs (en particulier l'argent sous forme non oxydé) se recombinent de manière non homogène de manière à diminuer le courant de fuite entre deux bornes testées (Phase/phase ou entrée/sortie d'un appareil).

Avantageusement, la technologie choisie sera un procédé de micro texturation de la surface par un laser de type femtoseconde dont la durée de pulse est très petite (typiquement inférieure à 1 ns) et délivrant une puissance crête très élevée (>10GW). Dans ces conditions, tous les matériaux peuvent être sublimés, et ceci sans aucun effet thermique, et en particulier les matériaux plastiques dont sont constitués les parois concernées par cette modification de surface. L'optimisation de la texture pourra être réalisée avec l'aide d'un microscope à force atomique permettant de réaliser simultanément la cartographie topographique et la cartographie résistive d'un même échantillon.

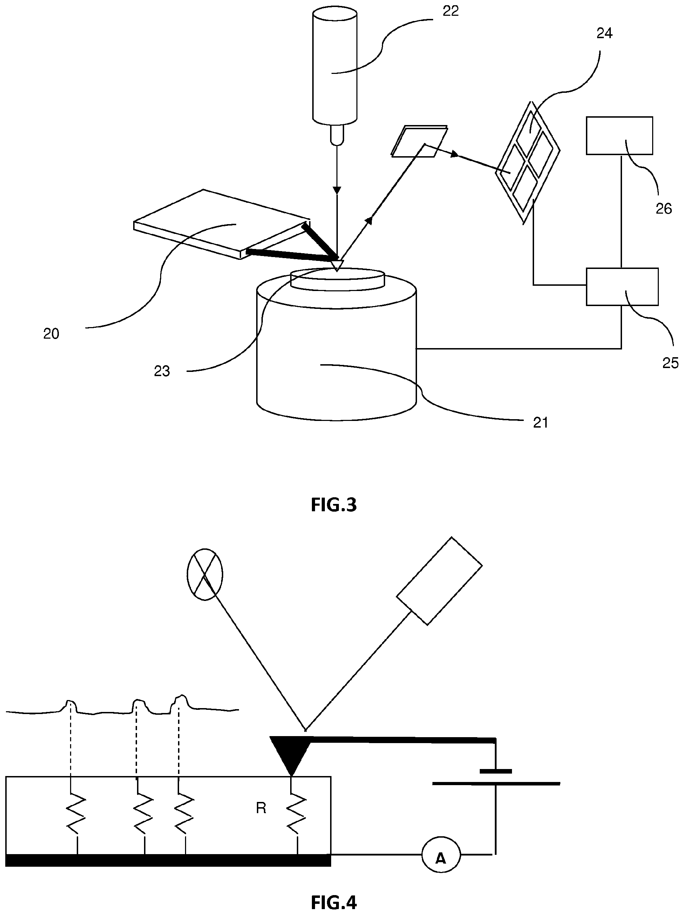

Cette technique utilisant un microscope à force atomique est illustrée schématiquement sur la figure 3, et étant connue en soi, ne sera pas décrite plus en détail. Cette technique utilise un levier en silicium 20, des tubes piézoélectriques 21, un laser 22, une pointe 23 intégrée au levier, un photodétecteur de position 24 du levier, un dispositif de régulation 25, un système de contrôle 26.

La figure 4 illustre la mesure de courant dans la couche de surface, cette mesure représentant une manière parmi d'autres d'évaluer la résistance superficielle sur cette surface, de manière à réaliser une surface optimum.

On notera que les modifications de texture porteront uniquement sur les surfaces de recondensation éloignées de la zone d'arc.

En effet, ces modifications sont sans intérêt sur les surfaces proches de l'arc car celles-ci sont fortement ablatées par l'arc.

Ce type de traitement laser permet d'obtenir une micro texturation de la surface plastique et en particulier dans des zones de condensation dites zones froides. La modification de la texture pourra être réalisée soit directement sur la pièce, soit sur le moule dont la micro texturation de surface sera le négatif de la micro texturation souhaitée.

Cette micro texturation est optimisée pour réduire très sensiblement les tensions superficielles en surface, en créant une surface super hydrophobe, ce qui réduit le nombre de sites de nucléation et favorise une croissance des dépôts suivant un axe sensiblement perpendiculaire à la surface de la paroi à texturer, tel que ceci est particulièrement visible sur la figure 5. Ceci conduit à une inhomogénéité de la recondensation des résidus de coupure par la croissance des dépôts par ilots isolés et non par la croissance d'un film continu, ce qui permet de limiter ainsi la conductivité du dépôt résultant.

L'invention consiste donc à modifier directement la texture de surface du matériau dont est constituée la paroi de façon à répondre aux exigences diélectriques en permettant de prendre en compte principalement les contraintes thermiques et mécaniques du matériau pour ce qui concerne les exigences de réussite en coupure.

L'invention s'applique à toute surface extérieure de paroi dont on veut diminuer la conductivité et située dans une zone de recondensation des éléments de décomposition conducteurs générés lors d'une coupure électrique.

Bien entendu, l'invention n'est pas limitée au mode de réalisation décrit et illustré qui n'a été donné qu'à titre d'exemple.

## Revendications

1. Procédé de traitement de la surface d'une paroi, en vue de réduire sa conductivité, ladite surface étant située dans une zone, dite zone froide, ladite zone étant située à proximité d'une zone dans laquelle est susceptible de se produire un arc électrique dans un appareil de protection électrique, ladite zone froide constituant une zone de recondensation des résidus de la coupure, **caractérisé en ce qu'**il consiste à réaliser sur cette surface (18) une micro-texturation de manière à favoriser une inhomogénéité de la recondensation des résidus de coupure par une croissance des dépôts de ces résidus sur la surface de manière à créer des îlots (19) de résidus et ainsi limiter la conductivité du dépôt résultant.

2. Procédé de traitement selon la revendication 1, **caractérisé en ce que** l'on réalise une croissance des dépôts de ces résidus sur la surface suivant une direction sensiblement perpendiculaire au plan de ladite surface

3. Procédé de traitement selon la revendication 1 ou 2, **caractérisé en ce que** l'on réalise grâce à ce procédé de micro texturation une surface super hydrophobe, ce procédé étant optimisé de manière à réduire très sensiblement les tensions superficielles sur la surface, ce qui permet de réduire le nombre de sites de nucléation et favorise une croissance des dépôts suivant l'axe vertical.

4. Procédé de traitement selon l'une quelconque des revendications 1 à 3, **caractérisé en ce que** ce procédé est un procédé de micro texturation au laser (22).

5. Procédé de traitement selon la revendication 4, **caractérisé en ce que** c'est un procédé de micro texturation par laser (22) dont la durée de pulse est inférieure à 1 nano secondes et délivrant une puissance crête supérieure à 10 GW.

6. Procédé de traitement selon l'une quelconque des revendications précédentes, **caractérisé en ce que** la micro-texturation de surface précitée (18) est réalisée directement sur la paroi précitée ou bien est obtenue par moulage de la pièce comportant la paroi précitée par l'intermédiaire d'un moule dont la micro texturation de surface est l'opposé de la micro texturation souhaitée sur la pièce.

7. Procédé de traitement selon l'une quelconque des revendications précédentes, **caractérisé en ce que** cette paroi est réalisée dans un matériau plastique.

8. Appareil de protection électrique comportant au moins une paroi située dans une zone de recondensation éloignée de la zone d'arc et dont la surface a été modifiée par un procédé de traitement selon l'une quelconque des revendications précédentes de manière à améliorer l'isolation post-coupure de l'appareil.

9. Appareil selon la revendication 8, **caractérisé en ce que** l'appareil précité est un disjoncteur D électrique basse tension.

10. Appareil selon la revendication 8 ou 9, **caractérisé en ce que** c'est un appareil multipolaire comportant plusieurs blocs unipolaires de coupure (3,4,5,6), et **en ce que** la paroi précitée appartient à une entretoise (9) située entre deux blocs unipolaires juxtaposés (5,6) ou bien appartient à un écran diélectrique (17) disposé entre d'une part, les séparateurs (16) et d'autre part, l'organe de contact mobile (14) en position ouverte des contacts.

## Patentansprüche

1. Verfahren zur Oberflächenbehandlung einer Wand, um ihre Leitfähigkeit zu reduzieren, wobei die Oberfläche in einer Zone angeordnet ist, die als kalte Zone bezeichnet wird, wobei die Zone in der Nähe einer Zone angeordnet ist, in der sich ein Lichtbogen in einer elektrischen Schutzvorrichtung bilden kann, wobei die kalte Zone eine Zone der Rekondensation von Trennrückständen bildet, **dadurch gekennzeichnet, dass** dieses aus der Durchführung einer Mikrotexturierung auf dieser Oberfläche (18) besteht, um eine Inhomogenität der Rekondensation von Trennrückständen durch ein Wachstum von Ablagerungen dieser Rückstände auf der Oberfläche zu begünstigen, um Inseln (19) der Rückstände zu erzeugen und so die Leitfähigkeit der erhaltenen Ablagerung zu begrenzen.

2. Behandlungsverfahren nach Anspruch 1, **dadurch gekennzeichnet, dass** ein Wachstum der Ablagerungen dieser Rückstände auf der Oberfläche in einer Richtung im Wesentlichen rechtwinklig zur Ebene der Oberfläche bewirkt wird.

3. Behandlungsverfahren nach Anspruch 1 oder 2, **dadurch gekennzeichnet, dass** mit diesem Verfahren eine Mikrotexturierung einer superhydrophoben Oberfläche durchgeführt wird, wobei dieses Verfahren optimiert wird, um die oberflächlichen Spannungen auf der Oberfläche sehr wesentlich zu reduzieren, wodurch es ermöglicht wird, die Anzahl von Nukleierungsstellen zu reduzieren, und ein Wachstum der Ablagerungen gemäß der vertikalen Achse zu begünstigen.

4. Behandlungsverfahren nach einem der Ansprüche 1 bis 3, **dadurch gekennzeichnet, dass** dieses Verfahren ein Verfahren zur Mikrotexturierung mittels Laser (22) ist.

5. Behandlungsverfahren nach Anspruch 4, **dadurch gekennzeichnet, dass** dieses ein Verfahren zur Mikrotexturierung mittels Laser (22) ist, dessen Impulsdauer kleiner als 1 Nanosekunde ist, und das eine Spitzenleistung von mehr als 10 GW ergibt.

6. Behandlungsverfahren nach einem der vorhergehenden Ansprüche, **dadurch gekennzeichnet, dass** die Mikrotexturierung der Oberfläche (18) direkt auf der Wand durchgeführt wird oder auch durch Formen des Stücks, das die Wand umfasst, mittels einer Form erhalten wird, deren Oberflächenmikrotexturierung zu der auf dem Stück gewünschten Mikrotexturierung entgegengesetzt ist.

7. Behandlungsverfahren nach einem der vorhergehenden Ansprüche, **dadurch gekennzeichnet, dass** diese Wand aus einem Kunststoffmaterial hergestellt ist.

8. Elektrische Schutzvorrichtung, umfassend mindestens eine Wand, die in einer Rekondensationszone entfernt von der Bogenzone angeordnet ist, und deren Oberfläche durch ein Behandlungsverfahren nach einem der vorhergehenden Ansprüche modifiziert wurde, um eine Isolierung nach dem Trennen der Vorrichtung zu verbessern.

9. Vorrichtung nach Anspruch 8, **dadurch gekennzeichnet, dass** die Vorrichtung ein elektrischer D-Schutzschalter mit niedriger Spannung ist.

10. Vorrichtung nach Anspruch 8 oder 9, **dadurch gekennzeichnet, dass** diese ein mehrpoliges Gerät ist, umfassend mehrere einpolige Trennblöcke (3, 4, 5, 6), und dadurch, dass die Wand zu einem Steg (9) gehört, der zwischen zwei benachbarten einpoligen Blöcken (5, 6) angeordnet ist oder auch zu einer dielektrischen Abschirmung (17) gehört, die einerseits zwischen den Separatoren (16) und andererseits dem mobilen Kontaktelement (14) in einer offenen Kontaktposition angeordnet ist.

## Claims

1. Method for treating the surface of a panel in order to reduce its conductivity, said surface being located in an area, called a cold area, said area being located near an area in which an electric arc may occur in an electric protection apparatus, said cold area forming an area of recondensation of the switching residues, **characterized in that** it consists in forming micro-texturing on this surface (18) so as to promote inhomogeneity of the recondensation of the switching residues, as a result of the growth of the deposits of these residues on the surface in such a way as to create islands (19) of residues and thus limit the conductivity of the resulting deposit.

2. Treatment method according to Claim 1, **characterized in that** the deposits of these residues are grown on the surface in a direction substantially perpendicular to the plane of said surface.

3. Treatment method according to Claim 1 or 2, **characterized in that** a superhydrophobic surface is produced by this method of micro-texturing, the method being optimized so as to greatly reduce the surface tensions on the surface, thereby reducing the number of nucleation sites and promoting the growth of the deposits along the vertical axis.

4. Treatment method according to any of Claims 1 to 3, **characterized in that** this method is a micro-texturing method using a laser (22).

5. Treatment method according to Claim 4, **characterized in that** it is a micro-texturing method using a laser (22) whose pulse duration is less than 1 nanosecond and which delivers a peak power of more than 10 GW.

6. Treatment method according to any of the preceding claims, **characterized in that** the aforesaid surface micro-texturing (18) is created directly on the aforesaid panel, or is obtained by molding the component including the aforesaid panel by means of a mold in which the surface micro-texturing is the opposite of the desired micro-texturing on the component.

7. Treatment method according to any of the preceding claims, **characterized in that** the panel is made of a plastic material.

8. Electric protection apparatus comprising at least one panel located in a recondensation area remote from the arc area, the surface of this panel having been modified by a treatment method according to any of the preceding claims, so as to improve the post-switching insulation of the apparatus.

9. Apparatus according to Claim 8, **characterized in that** the aforesaid apparatus is a low voltage electric circuit breaker D.

10. Apparatus according to Claim 8 or 9, **characterized in that** it is a multi-pole apparatus comprising a plurality of single-pole switching units (3, 4, 5, 6), and **in that** the aforesaid panel belongs to a spacer (9) located between two juxtaposed single-pole units (5, 6), or belongs to a dielectric screen (17) placed between the separators (16), on the one hand, and the movable contact member (14) in the open position of the contacts, on the other hand.
